**Europäisches Patentamt**

**European Patent Office**

**Office européen des brevets**

(11) Veröffentlichungsnummer: **0 231 930**
A2

(12) # EUROPÄISCHE PATENTANMELDUNG

(21) Anmeldenummer: **87101415.5**

(22) Anmeldetag: **03.02.87**

(51) Int. Cl.³: **B 60 T 11/30**
**B 60 T 11/20**

(30) Priorität: **07.02.86 DE 8603306 U**

(43) Veröffentlichungstag der Anmeldung:
**12.08.87 Patentblatt 87/33**

(84) Benannte Vertragsstaaten:
**DE FR GB IT**

(71) Anmelder: **LUCAS INDUSTRIES public limited company**
**Great King Street**
**Birmingham, B19 2XF West Midlands(GB)**

(72) Erfinder: **Macke, Sigmar**
**Weidtmanstrasse 39**
**D-5400 Koblenz(DE)**

(74) Vertreter: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) **Hydraulische Bremsanlage mit Entlüftung.**

(57) Eine geschlossene hydraulische Bremsanlage weist zumindest einen Hauptbremszylinder auf, dessen Druckkammer mit einem Reservoir (42) verbindbar ist. Zur Entlüftung der Hydraulikflüssigkeit in der Druckkammer (26, 28) ist ein strömungsabhängiges Ventil (50) zwischen der Druckkammer (26, 28) und dem Reservoir (42) für Hydraulikflüssigkeit angeordnet, Das strömungsabhängige Ventil (50) befindet sich oberhalb der Druckkammer (26), so daß Lufteinschlüsse zum strömungsabhängigen Ventil (50) steigen. Sobald der Hauptbremszylinder (10, 12) betätigt ist, wird eine geringe Menge Hydraulikflüssigkeit durch das strömungsabhängige Ventil (50) zum Reservoir (42) gefördert, wonach das Ventil schließt.

FIG. 1

EP 0 231 930 A2

0231930

PATENTANWÄLTE
WUESTHOFF - v. PECHMANN - BEHRENS - GOETZ
EUROPEAN PATENT ATTORNEYS

DR. ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING. DIPL.-WIRTSCH.-ING. RUPERT GOETZ
DIPL.-PHYS. DR. AXEL VON HELLFELD

Lucas Ind. p.l.c.
EP-61 022

D-8000 MÜNCHEN 90
SCHWEIGERSTRASSE 2
TELEFON: (089) 66 20 51
TELEGRAMM: PROTECTPATENT
TELEX: 5 24 070
TELEFAX: (089) 66 39 36 (III)

## Hydraulische Bremsanlage mit Entlüftung

Die Erfindung betrifft eine geschlossene hydraulische Bremsanlage mit zumindest einem Hauptbremszylinder, dessen Druckkammer mit einer Bremsleitung und über eine durch ein Auffüllventil verschließbare Auffüll-Leitung mit einem Reservoir für Hydraulikflüssigkeit verbindbar ist.

Aus der EP-OS 0049969 ist eine derartige hydraulische Bremsanlage bekannt. Dort sind zwei Hauptbremszylinder parallel zueinander angeordnet und ihre Druckkammern sind über eine Ausgleichsleitung miteinander verbunden. Solche Bremsanlagen werden bevorzugt bei landwirtschaftlichen Fahrzeugen eingesetzt. Dabei ist üblicherweise jeder Hauptbremszylinder mit den Bremsen oder der Bremse einer Seite des Fahrzeuges verbunden. Soll das gesamte Fahrzeug abgebremst werden, so werden beide Hauptbremszylinder betätigt. Will hingegen der Fahrer eine extrem enge Kurve fahren, so wird mittels einem einzigen Hauptbremszylinder nur ein Rad auf einer Seite des Fahrzeuges abgebremst, während die Räder auf der gegenüberliegenden Seite ungebremst bleiben.

Bei hydraulischen Bremsanlagen und insbesondere bei geschlossenen Bremsanlagen, ist die Entlüftung der Hydraulikflüssigkeit eine wesentliche Voraussetzung für die Funktionstüchtigkeit der Bremsen. Bei einer schlecht entlüfteten Bremsanlage reicht die vom Hauptbremszylinder erzeugte Verdrängung wegen der Kompressibilität der eingeschlossenen Luft nicht aus, um die Bremsen unter einen genügend hohen Druck zu setzen. Die Gaseinschlüsse in der Hydraulikflüssigkeit sind nicht nur durch von außen eindringende Luft bedingt, sondern können auch durch aus der Hydraulikflüssigkeit selbst gebildete Gase entstehen, insbesondere durch das sogenannte "Cracken" der Kohlenwasserstoffe der Hydraulikflüssigkeit.

Bei offenen hydraulischen Bremsanlagen wird die Hydraulikflüssigkeit ständig umgepumpt. Lufteinschlüsse in der Hydraulikflüssigkeit werden dabei mitgeführt und im Reservoir abgeschieden. Bei geschlossenen hydraulischen Bremsanlagen ist eine derart einfache Abscheidung der Lufteinschlüsse nicht möglich.

Der Erfindung liegt die Aufgabe zugrunde, eine hydraulische Bremsanlage zu schaffen, die im Betrieb ständig entlüftet wird. Die Entlüftung soll mit einfachen Mitteln zuverlässig erreicht werden.

Erfindungsgemäß wird diese Aufgabe bei einer geschlossenen hydraulischen Bremsanlage mit nur einem Hauptbremszylinder dadurch gelöst, daß in einer Leitung zwischen der Druckkammer und dem Reservoir oberhalb der Druckkammer ein strömungsabhängiges Ventil vorgesehen ist, das bei druckentlasteter Druckkammer offen und bei Druck in der Druckkammer eine geringe Menge Hydraulikflüssigkeit in das Reservoir passieren läßt und dann schließt.

Besonders vorteilhaft läßt sich die Erfindung bei einer geschlossenen hydraulischen Bremsanlage mit zwei Hauptbremszylindern anwenden, deren Druckkammern durch eine zumindest teilweise oberhalb derselben verlaufende Ausgleichsleitung verbindbar sind, die zumindest ein Ventil aufweist, welches die Verbindung zwischen den Druckkammern über die Ausgleichsleitung dann verschließt, wenn nur einer der Hauptbremszylinder betätigt ist und diese Verbindung öffnet, wenn beide Hauptbremszylinder betätigt sind. Bei einer derartigen Bremsanlage, wie sie aus der EP-OS 0049969 bekannt ist, ist zwischen den Hauptbremszylindern eine Ausgleichsleitung vorgesehen, um die beiden Druckkammern zu verbinden und dafür zu sorgen, daß in beiden Bremskreisläufen der gleiche Druck herrscht. Wird nur einer der Hauptbremszylinder betätigt, so ist die Ausgleichsleitung zumindest annähernd geschlossen und nur der betätigte Hauptbremszylinder erzeugt in seiner Druckkammer Druck, welcher auf die zugehörige Bremsleitung übertragen wird.

Die Erfindung ermöglicht bei einer derartigen geschlossenen hydraulischen Bremsanlage mit zwei Hauptbremszylindern dadurch eine sehr einfache Entlüftung, daß das strömungsabhängige Ventil an oder in der Ausgleichsleitung in einem Strömungsweg zum Reservoir angeordnet ist.

Strömungsabhängige Ventile sind als solche bekannt. Sie schließen dann, wenn die Strömung durch das Ventil einen vorgegebenen Wert überschreitet.

Da die Luftblasen in der Hydraulikflüssigkeit aufgrund Ihres geringeren spezifischen Gewichtes nach oben steigen, ist in einer bevorzugten Ausgestaltung der Erfindung vorgesehen, daß der Strömungsweg in der Leitung zwischen der Druckkammer bzw. den Druckkammern und dem Reservoir einschließlich des strömungsabhängigen Ventils kontinuierlich ansteigt. Die Luftblasen werden also aufgrund ihres eigenen Auftriebes in Richtung zum Reservoir gefördert. Damit sich in der Druckkammer bzw. den Druckkammern der Hauptbremszylinder keine Luftblasen festsetzen, sind die Hauptbremszylinder derart gegen die Horizontale geneigt, daß die Luftblasen in die gewünschte Richtung, d.h. zum strömungsabhängigen Ventil steigen. Es versteht sich, daß sich der Begriff "horizontal" auf ein waagerecht stehendes Fahrzeug bezieht.

Das strömungsabhängige Ventil ist bei druckentlasteter Bremse, also unbetätigtem Hauptbremszylinder, geöffnet, so daß die Luftblasen ungehindert zum Reservoir steigen können.

Nachfolgend wird die Erfindung anhand eines in der Zeichnung dargestellten Ausführungsbeispieles näher erläutert. Es zeigt:

Fig. 1   eine schematische Teilansicht einer geschlossenen hydraulischen Bremsanlage mit zwei Hauptbremszylindern und

Fig. 2   einen Schnitt durch das in Fig. 1 gezeigte strömungsabhängige Ventil in vergrößertem Maßstab.

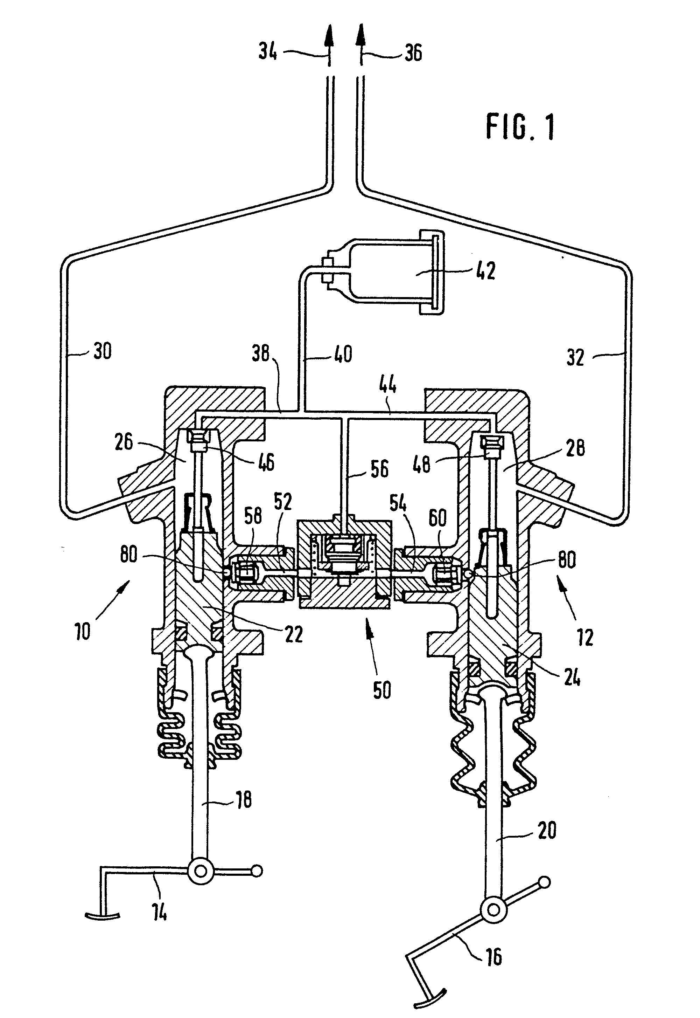

Gemäß Fig. 1 sind zwei Hauptbremszylinder 10, 12 parallel zueinander angeordnet. Jedem der Hauptbremszylinder 10, 12 ist ein Bremspedal 14 bzw. 16 zugeordnet. Das in Fig. 1 links gezeichnete Bremspedal 14 ist betätigt, während das rechts gezeichnete Bremspedal 16 unbetätigt ist. Die Bremskraft wird über Stangen 18 bzw. 20 auf Kolben 22 bzw. 24 übertragen, welche jeweils in den Druckräumen 26 bzw. 28 Druck erzeugen.

Die Hauptbremszylinder 10, 12 sind jeweils über eine Bremsleitung 30 bzw. 32 mit den Bremsen (nicht gezeigt) auf einer Fahrzeugseite verbunden. Die linke Bremsleitung 30 führt beispielsweise zu auf der Fahrzeugseite links angeordneten Bremsen, welche durch den Pfeil 34 angedeutet sind, während die rechte Bremsleitung 32 beispielsweise zu den rechts angeordneten Bremsen führt, welche durch den Pfeil 36 angedeutet sind.

Die Druckkammern 26, 28 sind durch Auffüll-Leitungen 38, 40 bzw. 44 mit dem Reservoir 42 für Hydraulikflüssigkeit verbunden. Das Reservoir 42 dient zum Auffüllen der Druckkammern mit Hydraulikflüssigkeit und ist als solches bekannt. Bei Betätigung eines Hauptbremszylinders 10 oder 12 wird ein Ventil 46 bzw. 48 geschlossen, welches die Druckkammern 26 bzw. 28 von dem Reservoir 42 trennt.

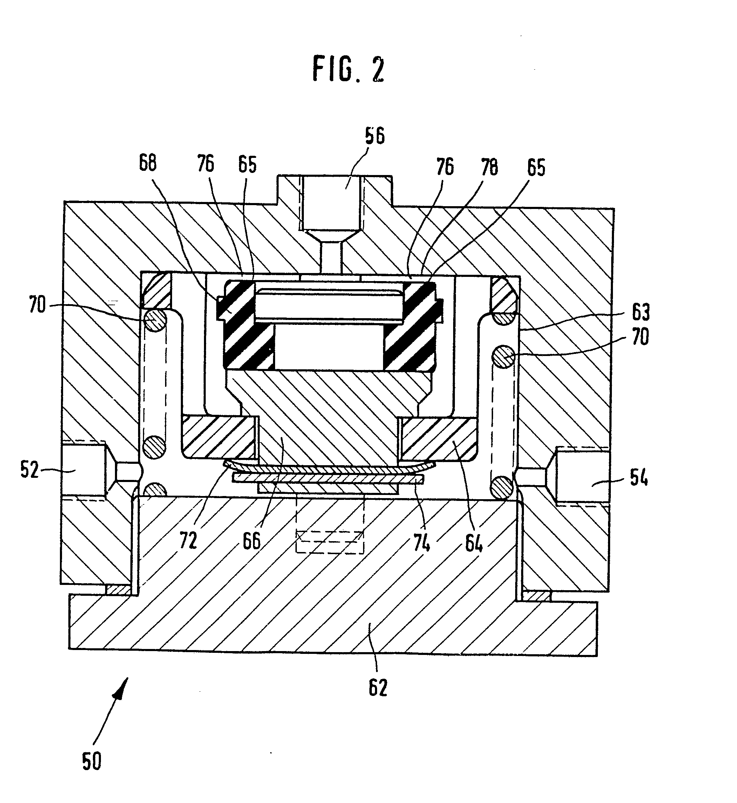

Zwischen den beiden Druckkammern 26, 28 ist ein strömungsabhängiges Ventil 50 angeordnet, welches unten anhand der Fig. 2 näher beschrieben wird. Das strömungsabhängige Ventil 50 ist in einer Ausgleichsleitung 52, 54 zwischen den Druckkammern 26, 28 angeordnet, d.h. der Strömungsweg der Ausgleichsleitung 52, 54 zwischen den Druckkammern läuft durch das strömungsabhängige Ventil 50, aber nicht durch dessen Ventil-Öffnung (s. Fig. 2). Die Ausgleichsleitung 52, 54 ist gegen jede der Druckkammern 26, 28 jeweils durch ein Ventil 58 bzw. 60 absperrbar. Die Funktion der Ausgleichsleitung 52, 54 sowie der Ventile 58, 60 ist als solche bekannt und in der EP-OS 0049969 beschrieben.

Das in Fig. 2 in vergrößertem Maßstab gezeigte strömungsabhängige Ventil 50 weist ein Ventilgehäuse 62 auf, in dessen Bohrung 63 ein Käfig 64 aus Kunststoff eingepaßt ist. Ein Ventilkörper 66 ist in bezug auf das Gehäuse 62 und den Käfig 64 bewegbar angeordnet. Der Ventilkörper 66 ist mit einem Aufsatz 68 aus Elastomer versehen, welcher mit seinen Stirnflächen 65 die Dichtfläche des Ventiles bildet. Eine Feder 70 spannt den Käfig 64 in Fig. 2 nach oben. Eine Blattfeder 72 wirkt zwischen dem Käfig 64 und dem Ventilkörper 66 und drückt letzteren in Fig. 2 normalerweise, d.h. in der Offen-Stellung des Ventiles, nach unten. Dabei drückt die Blattfeder 72 gegen einen Vorsprung 74 am Ventilkörper 66.

Der Strömungsweg der Hydraulikflüssigkeit von den Druckkammern 26, 28 verläuft über die Kanäle der Ausgleichsleitung 52, 54 durch die Bohrung 63 im Ventilgehäuse 62 zur engen Ventil-Passage 76 und zur Leitung 56 (vgl. Fig. 1).

Der Strömungsweg aus den Druckkammern 26, 28 über die Ventile 58, 60, die Ausgleichsleitung 52, 54, das strömungsabhänige Ventil 50 und die Leitungen 56, 40 zum Reservoir 42 steigt kontinuierlich an, so daß sich Lufteinschlüsse in der Hydraulikflüssigkeit entlang dieses Strömungsweges nach oben bewegen. Ist keiner der Hauptbremszylinder 10, 12 betätigt, so ist das strömungsabhängige Ventil 50 druckentlastet und somit geöffnet, so daß Luftblasen nach oben in das Reservoir 42 steigen können.

Es ist nicht unbedingt entscheidend, daß der Strömungsweg zwischen dem strömungsabhängigen Ventil 50 und dem Reservoir 42 kontinuierlich ansteigt, da es im wesentlichen auf die Entlüftung der Hydraulikflüssigkeit in den Druckkammern 26, 28 ankommt. Wesentlich ist, daß vor den Ventil-Dichtflächen des Ventils 50 keine vertikal höher gelegenen Toträume vorhanden sind, in denen sich Gase sammeln können. Es versteht sich, daß die Begriffe "oben" und "höher gelegen" sich auf eine horizontale Ebene beziehen.

Wird einer der Hauptbremszylinder 10, 12 betätigt, wie z.B. in Fig. 1 der linke Hauptbremszylinder 10, so wird das zugehörige Ventil 58 mittels der von dem Kolben 22 beaufschlagten Kugel 80 geöffnet und Hydraulikflüssigkeit strömt über die Ausgleichsleitung 52 in die Bohrung 63 des strömungsabhängigen Ventils 50. Sobald die Strömungsgeschwindigkeit der Hydraulikflüssigkeit in der engen Ventil-Passage 76 einen bestimmten Wert erreicht hat, schließt der Ventilkörper 66 aufgrund der entstehenden Druckdifferenz, d.h. in Fig. 2 bewegt sich der Ventilkörper 66 nach oben, so daß sich die Dichtfläche 65 auf den Ventilsitz 78 legt und das Ventil 50 geschlossen ist. Das Reservoir 42 ist somit von der beaufschlagten Druckkammer 26 getrennt und der Bremsdruck kann erzeugt werden. Zuvor ist eine geringe Menge Hydraulikflüssigkeit einschließlich der evtl. enthaltenen Luftblasen durch das Ventil 50 zur Leitung 56 geströmt, so daß die Lufteinschlüsse zum Reservoir 42 gefördert werden. Ist das strömungsabhängige Ventil 50 einmal aufgrund des Unterdruckes geschlossen, so bleibt es während der Bremsung geschlossen, da der Hydraulik-Druck der Druckkammern 26, 28 einseitig auf den Ventilkörper 66 wirkt.

PATENTANWÄLTE

WUESTHOFF - v. PECHMANN - BEHRENS - GOETZ

EUROPEAN PATENT ATTORNEYS

DR.-ING. FRANZ WUESTHOFF
DR. PHIL. FREDA WUESTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING. DIPL.-WIRTSCH.-ING. RUPERT GOETZ
DIPL.-PHYS. DR. AXEL VON HELLFELD

D-8000 MÜNCHEN 90
SCHWEIGERSTRASSE 2

TELEFON: (089) 66 20 51
TELEGRAMM: PROTECTPATENT
TELEX: 5 24 070
TELEFAX: (089) 66 39 36 (III)

Lucas Ind. p.l.c.

EP-61 022

# Patentansprüche

1. Geschlossene hydraulische Bremsanlage mit zumindest einem Hauptbremszylinder (10, 12), dessen Druckkammer (26, 28) mit einer Bremsleitung (30, 32) und über eine durch ein Auffüllventil (46, 48) verschließbare Auffüll-Leitung (38, 40) mit einem Reservoir (42) für Hydraulikflüssigkeit verbindbar ist, dadurch gekennzeichnet, daß in einer Leitung (52, 56, 38, 40) zwischen der Druckkammer (26) und dem Reservoir (42) oberhalb der Druckkammer (26) ein strömungsabhängiges Ventil (50) vorgesehen ist, das bei druckentlasteter Druckkammer (26, 28) offen und bei Druck in der Druckkammer eine geringe Menge Hydraulikflüssigkeit in das Reservoir (42) passieren läßt und dann schließt.

2. Bremsanlage nach Anspruch 1, dadurch gekennzeichnet, daß der Strömungsweg in der Leitung (52, 56, 38, 40) zwischen der Druckkammer (26, 28) und dem Reservoir (42) einschließlich des strömungsabhängigen Ventils (50) kontinuierlich ansteigt.

3. Bremsanlage nach einem der Ansprüche 1 oder 2 mit zwei Hauptbremszylindern (10, 12), deren Druckkammern (26, 28) durch eine zumindest teilweise oberhalb der Druckkammern verlaufende Ausgleichsleitung (52, 54) verbindbar sind, zumindest einem Ventil (58, 60), welches die Verbindung zwischen den Druckkammern (26, 28) über die Ausgleichsleitung (52, 54) dann verschließt, wenn nur einer der Hauptbremszylinder (10) betätigt ist und diese Verbindung öffnet, wenn beide Hauptbremszylinder (10, 12) betätigt sind,
dadurch g e k e n n z e i c h n e t,
daß das strömungsabhängige Ventil (50) an oder in der Ausgleichsleitung (52, 54) in einem Strömungsweg (52, 54, 56, 40) zum Reservoir (42) angeordnet ist.

4.    Bremsanlage nach Anspruch 3,
dadurch g e k e n n z e i c h n e t,
daß die Auffüll-Leitung (38, 44) die beiden Druckkammern (26, 28) und das Reservoir (42) miteinander verbindet und daß das strömungsabhängige Ventil (50) mit der Auffüll-Leitung verbunden ist.

5.    Bremsanlage nach einem der Ansprüche 3 oder 4,
dadurch g e k e n n z e i c h n e t,
daß die Längsachsen der zwei Hauptbremszylinder (10, 12) in eingebautem Zustand leicht gegen die Horizontale geneigt sind.

FIG. 1

1/2

0231930

# FIG. 2